# FASCICULE DE BREVET EUROPEEN

(11) **EP 2 487 452 B1**
(45) Date de publication et mention de la délivrance du brevet: **08.01.2014**
(21) Numéro de dépôt: 11153688.4
(22) Date de dépôt: 08.02.2011
(51) Int. Cl.: G01B 3/20, G08C 17/02

(54) **Instrument de mesure de dimensions avec interface et interface correspondante**
Instrument zur Messung von Abmessungen mit Schnittstelle, und entsprechende Schnittstelle
Instrument for measuring dimensions with an interface, and corresponding interface

(43) Date de publication de la demande: 15.08.2012
(73) Titulaire: TESA SA, 1020 Renens (CH)
(72) Inventeur: Jordil, Pascal, 1612 Ecoteaux (CH); Mariller, Serge, 1033 Cheseaux-sur-Lausanne (CH)
(74) Mandataire: P&TS SA (AG, Ltd.)

(56) Documents cités:
- EP-A1- 0 974 808
- EP-A2- 1 859 906
- WO-A1-2007/052504
- CN-A- 101 655 403
- GB-A- 2 326 002
- US-A- 5 008 665
- US-A1- 2008 177 503
- US-A1- 2009 315 725

## Description

### Domaine technique

La présente invention concerne un bouchon d'instrument portable de mesure dans le domaine de la métrologie dimensionnelle, pour les instruments de mesures portables ou semi-portable qui ne sont pas reliés à des équipements de traitement de donnée comme par exemple des calibres, micromètres pour mesures internes ou externes, sondes, comparateurs, colonne de mesure, etc, .... Plus précisément, la présente invention concerne une interface de communication qui s'adapte sur l'instrument de mesure portable de façon à très peu modifier l'ergonomie et ne modifie pas le fonctionnement de l'instrument. De plus, il sert à étendre la capacité de traitement et de transmission de donnée vers des équipements externes, comme par exemple un ordinateur, pour collecter, traiter et piloter les mesures.

### Etat de la technique

On connait dans l'état de la technique plusieurs exemples de pied à coulisse électronique avec interface de communication. Ils utilisent, par exemple, des interfaces de communication sérielles asynchrones selon le standard RS232, et un connecteur sériel, permettant la transmission de donnée de mesure vers une imprimante ou un ordinateur. Le câble de connexion, toutefois, limite fortement la maniabilité de l'instrument et ne sert qu'à la communication unidirectionnelle. Dans un instrument étanche, le connecteur est d'ailleurs sensible aux mauvais contacts et est aussi un point d'accès potentiel d'eau ou de poussière. EP980506, par exemple, décrit un calibre de précision de type électronique composé d'une règle magnétique et d'un système de lecture de type magnétorésistif, le système ayant un logement pour insérer une interface sérielle optoélectronique pour communiquer vers un ordinateur tout en conservant l'étanchéité de l'instrument. Toutefois ceci nécessite des interfaces spéciales et des câbles spécialisés munis d'adaptateurs et de convertisseurs pour chaque fabricant et chaque sorte d'appareils.

Le document US5008665 décrit un pied à coulisse avec un émetteur radio intégré à l'intérieur du circuit de mesure. Ce dispositif permet une transmission unidirectionnelle des mesures effectuées par liaison radio à un dispositif externe. L'émetteur est alimenté par la pile bouton du l'instrument de mesure, réduisant ainsi l'autonomie de l'instrument et compromettant la précision.

Le document US6502057 décrit un calibre électronique avec un émetteur radio détachable, se fixant sur le coulisseau par un système de blocage propriétaire, et relié avec le circuit de mesure par un connecteur dédié. L'émetteur augmente sensiblement le volume de l'instrument, et le connecteur est un point d'accès potentiel d'eau ou de poussière. De plus il est adapté à un nombre limité d'instrument de par son système de fixation et l'utilisation d'un bouton de déclenchement.

GB2326002 décrit un instrument de mesure installé dans un puits dans le sol ayant une interface radio. US2009315725 décrit une interface de communication universelle sans fils à microprocesseur. EP1859906 décrit un système de transmission sans fils dans une clé dynamométrique, avec une batterie dans le manche et un circuit électronique dans un boîtier fermé par un couvercle plat.

### Bref résumé de l'invention

Un but de la présente invention est de proposer une interface de communication avec les caractéristiques de la revendication correspondante, qui s'adapte autant bien aux calibres électroniques qu'aux autres instruments de mesure électronique portables, sans que cela ne nécessite une connectique externe spécialisée, tout en garantissant l'étanchéité de l'instrument. L'élément de communication est conçu pour offrir la possibilité de communiquer par une interface que l'on peut installer sur l'instrument dans un logement étanchéifié déjà existant et qui va étendre les possibilités de l'instrument sans pour autant modifier son apparence ou son maniement.

L'interface peut être de type sans fils ou munie d'un système filaire, elle est intégrée dans un espace étanche de l'instrument, pour transmettre des informations de manière bidirectionnelle avec les équipements externes. L'interface étant incluse dans un volume étanche, formé par le couvercle et le logement de pile de l'instrument. Un système d'ouverture permet d'accéder aux différentes piles de l'instrument et de l'élément de transmission. Dans le cas d'une transmission filaire le système peut recevoir de l'énergie au travers des fils.

Dans une variante, l'interface est adaptée pour transmettre des données de mesure à un dispositif récepteur amovible qui est logé temporairement à l'intérieur du volume étanche, comme par exemple de carte mémoire miniature de type MicroSD. L'élément de transmission peut aussi comprendre ou être remplacé par des éléments de traitement de données.

De préférence, l'interface reprend les données issues de l'instrument et au moyen d'un système capable de décision et de traitement, il va effectuer les traitements nécessaires de façon autonome. C'est-à-dire qu'il va effectuer les opérations de stockage, de traitement, de transformation, de correction ou de transmission nécessaire par rapport à ce que l'utilisateur aura choisi et même avec l'ajout de mesures additionnelles, il sera en mesure d'ajouter une correction spécifique à l'environnement qui pourra qualifier la mesure au travers du module additionnel présent dans le logement de pile.

Les instruments sont capables de transmettre des données, lors de l'action sur un bouton de l'instrument. Cette fonction reste utilisable avec l'invention, mais l'instrument peut aussi fonctionner dans un mode de transmission continue, ou dans un mode de recherche de minimum ou de maximum, ou dans un mode de mesures combinées ou de mesure en série selon un plan préétabli. Dans tous ces cas l'utilisateur a le choix du mode de travail et il peut ainsi envoyer les informations régulièrement ou de les stocker temporairement et les transmettre à dessein.

D'autre part, le système de mesure et de traitement de l'instrument peut être reprogrammé dans certain cas, pour accepter un certain nombre de fonctions nouvelles et permettre de sélectionner certaine les fonctions additionnelle du module ajouté. Le but de cette reprogrammation étant de pouvoir étendre l'interface utilisateur et ainsi donner l'accès à l'affichage et aux boutons pour les nouvelles fonctions et permettre à l'utilisateur d'interagir à travers l'instrument avec le module ajouté. Ainsi quand les mesures sont pilotées par un programme de mesure issu des programmes d'usinage ou des dessins de conception, l'utilisateur peut contrôler le déroulement ou parer aux erreurs de mesure en réaffectant, quand c'est nécessaire, l'usage des boutons disponibles. Cela permet entre autre à l'interface utilisateur de l'instrument d'interagir avec l'invention dans chaque mode d'une façon adéquate et simple.

Dans ce mode de fonctionnement, il est possible d'afficher des messages, des alertes ou d'accéder à des fonctions de l'invention et de sélectionner des programmes de mesure au moyen des boutons conventionnels de l'instrument. Dans le cas où l'instrument n'est pas reprogrammable, il est toujours possible d'interagir avec le module à travers des liaisons externes, pour installer des programmes et lancer l'exécution d'opération et de programmes commandes. Dans le cas où l'affichage est difficile à lire, on s'orientera plus vers des moyens d'avertissement sonores ou visuels permettant de se passer de l'affichage de l'instrument ou vers un système permettant de déporter celui-ci dans un endroit accessible à l'utilisateur.

L'afficheur externe peut servir à gérer et à programmer simultanément un ou plusieurs instruments distants et peut comporter une interface utilisateur plus étendue que celle de l'instrument, pour par exemple déclencher des fonctions préprogrammées ou réaliser des programmes d'instructions pour l'invention.

Ainsi un but de l'invention est de proposer un instrument de mesure portable selon la revendication correspondante, dont l'autonomie de mesure de l'instrument fonctionnant sur batterie n'est pas réduite ou altérée par la présence d'une interface consommatrice d'énergie ou perturbatrice lors de transmission de données. C'est pour cette raison que l'interface est munie d'une seconde source d'alimentation dédiée à cet élément de traitement et de transmission, pour que le système de mesure ne soit pas perturbé, ni sollicité par le dispositif de l'invention. De plus l'interconnexion est réalisée de façon à réduire la consommation par rapport aux systèmes existants au moyen d'opto-coupleurs ou de connexions par câbles sans alimentation. De plus, en cas de panne d'alimentation du module de transmission, le fonctionnement normal de l'instrument est maintenu si l'utilisateur veut continuer sans la transmission.

Un but de l'invention est de proposer un instrument de mesure offrant une modularité plus flexible et ergonomique des systèmes de traitement et de transmission de donnée de l'art antérieur, et ainsi étendre les possibilités de travail des instruments de mesure portables sans pour autant modifier la prise en main ou l'utilisation de l'instrument, mais en cherchant à intégrer dans le format existant des fonctionnalités additionnelles grâce au contenu de l'invention permettant ainsi d'étendre la précision et la qualité de mesure des appareils portables.

Selon l'invention, ces buts sont atteints notamment au moyen de l'objet de la revendication principale.

Dans la suite de la présente description, on fait référence à un calibre de précision. Il faut comprendre toutefois que cela n'est pas une limitation essentielle de l'invention à ce type d'instrument, on comprend également tout instrument de mesure électronique portable pouvant être équipé de l'invention et capable de traitement ou de communication de données mentionnée dans la partie caractérisant de la revendication 1, comme par exemple des micromètres, des comparateurs, des sondes, et de manière plus générale, des appareils de mesures électroniques qui sont généralement autonomes et que l'on peut relier optionnellement à des équipements informatiques.

Lorsque la présente invention mentionne des piles électriques, il faut aussi comprendre que cela ne représente pas une caractéristique limitative de l'invention, les piles pouvant être remplacées par une source d'alimentation électrique stable amenée depuis l'extérieur ou autonome idoine sans sortir du cadre de l'invention. On peut mentionner, à titre d'exemples non exhaustifs de sources d'alimentation autonomes, des accumulateurs Ni-MH, des générateurs transformant l'énergie mécanique en énergie électrique, ou des modules photovoltaïques.

De plus, le fait d'avoir deux sources d'alimentations séparée n'est pas une caractéristique limitative. Il est aussi possible d'avoir une source commune d'alimentation, en particulier quand le mode d'utilisation n'entre pas dans les fonctions conventionnelles de l'instrument et que l'on ne désire pas maintenir de modes de fonctionnement autres que ceux utilisant la transmission. Par contre, dans ce cas là, pour maintenir la précision de mesure, la décharge de la pile sera limitée, pour garantir des conditions de mesure correctes.

### Brève description des figures

Des exemples de mise en oeuvre de l'invention sont indiqués dans la description illustrée par les figures annexées dans lesquelles :
La figure 1 illustre schématiquement un calibre électronique selon un aspect de l'invention.
La figure 2 représente une section du coulisseau du calibre représenté sur la figure 1.
La figure 3 illustre un détail d'un bouchon pour le logement des piles du calibre de la figure 1.
La figure 4 illustre schématiquement le circuit électronique d'un calibre selon une variante de l'invention.
Les figures 5 et 6 illustre l'application d'un couvercle selon un aspect de l'invention à un comparateur, respectivement à un micromètre.

### Exemple(s) de mode de réalisation de l'invention

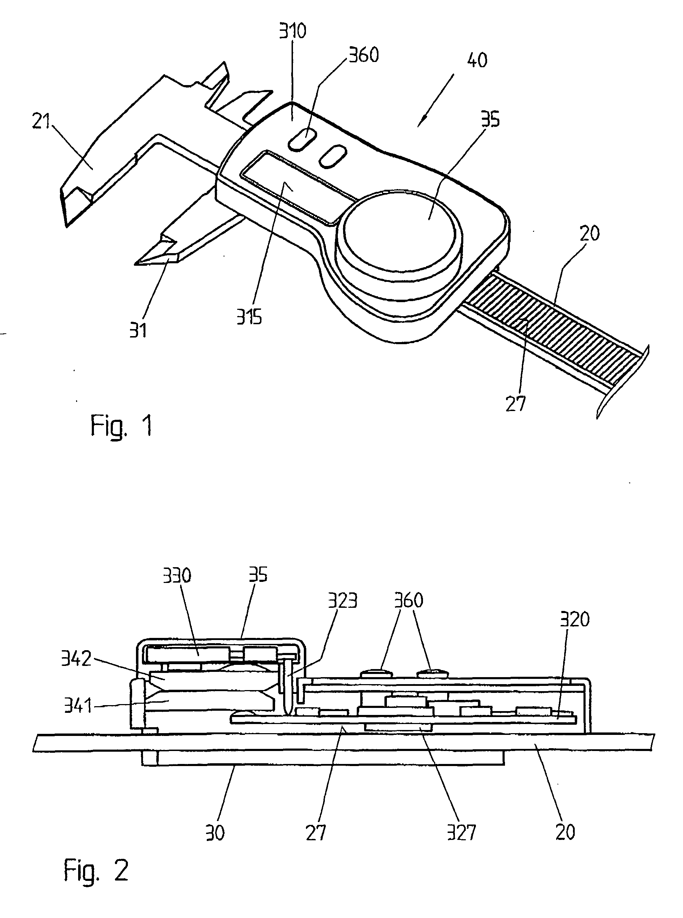

Selon la variante de l'invention illustrée à la figure 1, une interface de communication est montée sur le calibre 40 qui comporte une perche 20 sur laquelle peut se déplacer longitudinalement un coulisseau 30. La perche peut avoir différentes longueurs selon l'utilisation prévue de l'instrument, par exemple 20 cm, et est munie d'un bec fixe 21, tandis que le coulisseau porte un bec mobile 31, lequel se déplace parallèlement au bec fixe 21 le long de la perche 20 avec le coulisseau. L'affichage 315 indique une mesure dépendante de l'écartement entre le bec fixe 21 et le bec mobile 31.

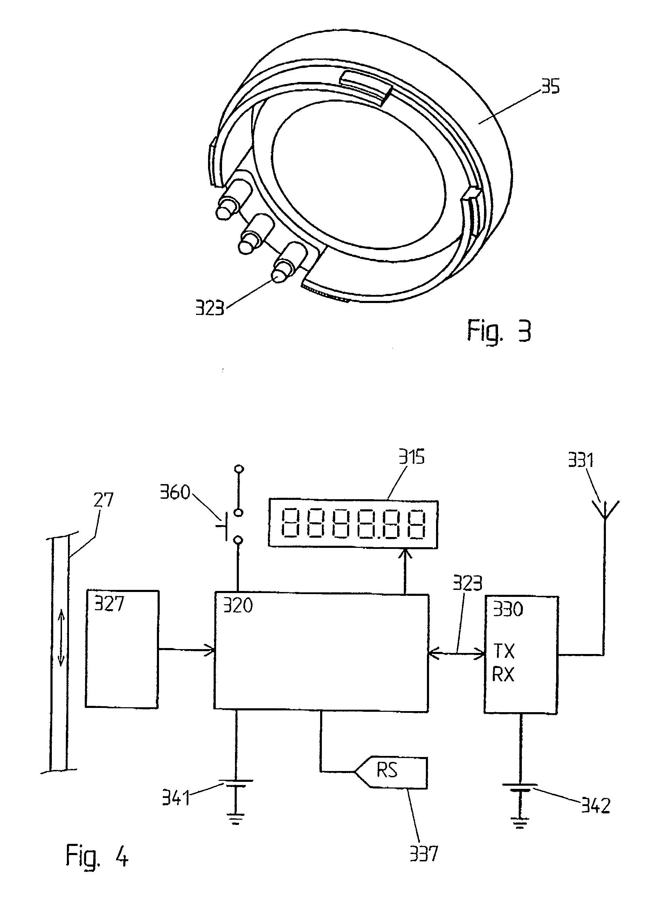

Dans l'exemple illustré la perche 20 comporte une règle magnétique 27 sur la portion de la perche 20 au-dessus de laquelle le coulisseau 30 est susceptible d'être déplacé. Le coulisseau comprend un circuit électronique de mesure 320, visible sur les figures 2 et 4, équipé d'un capteur magnétique 327 sensible aux variations du champ magnétique généré par le déplacement du coulisseau 30 relativement à la perche 20, et arrangé pour déterminer la valeur de la distance entre les becs 21, 31. L'instrument affiche la valeur mesurée et un bouton poussoir 360 permet de déclencher la transmission de la mesure vers un dispositif externe, au moyen d'une interface de traitement et de transmission par onde radio, ou vers un moyen de stockage interne amovible. Une description détaillée de cette partie de l'invention est présentée, par exemple, dans le document EP980506 évoqué plus haut.

Par ailleurs, l'instrument selon l'invention pourrait utiliser, en lieu et place d'un système à capteur magnétique, un système à capteur optique ou capacitif, ou tout autre système d'encodage de position ou d'orientation approprié ou toute autre combinaison de capteur et de référence déplaçable l'un par rapport à l'autre, permettant de déduire et mesurer un déplacement linéaire ou angulaire et déterminer une position absolue ou relative. Dans une variante de l'invention, l'instrument de mesure est un micromètre comprenant une touche mobile entraînée par une vis micrométrique et la mesure de la touche mobile est déterminée par un encodeur rotatif.

Le circuit de mesure 320 est alimenté par une pile 341, visible sur les figures 2 et 4. Typiquement, on trouve dans cette classe d'instrument des piles bouton par exemple alcalines, oxyde d'argent, au mercure ou au Lithium, mais on pourrait aussi utiliser des accumulateurs. La pile est placée dans un logement du coulisseau 30 prévu à cet effet et fermé par un couvercle étanchéifié 35 au moyen d'un joint de type o-ring, permettant l'accès à la pile 341 et son replacement. L'étanchéité peut être exprimée par une norme spécifique, par exemple IP65.

L'instrument selon l'invention comporte préférablement aussi des moyens d'introduction de données manuels ou interface utilisateur, par exemple les boutons 360, permettant de sélectionner différents modes de mesure, de mettre l'instrument en fonction, ces fonctions étant aussi activables depuis un système externe capable de transmettre des commandes à l'appareil. De plus, l'invention est conçue de manière à permettre de traiter, stocker et transmettre des données et des informations avec l'extérieur. Le calibre inclus une interface sérielle qui peut être de type USB ou RS232 ou 12C ou encore un autre standard de bus de communication bien connus pour échanger les informations par divers moyen de communication avec des périphériques et appareils externes. Ces moyens ne sont pas exclusifs, le système pouvant s'adapter à plusieurs normes au moyen d'une programmation adéquate. L'interface est incluse entièrement dans le couvercle 35 permettant ainsi au système de l'instrument de transmettre ou de recevoir des données, des programmes, des commandes de programmation, des commandes de déclenchement et toutes les informations liées au prétraitement et au traitement des mesures, au fonctionnement de l'instrument et à la communication.

L'invention s'intègre avec l'instrument de manière que les boutons existants sur l'instrument permettent de transmettre les mesures affichées en actionnant le bouton dédié à cet usage. C'est-à-dire l'action sur ce bouton permet d'envoyer la valeur affichée vers un dispositif externe. L'invention sert alors à transmettre la mesure, mais peut aussi effectuer un traitement de correction de valeur comme par exemple une compensation thermique ou une transformation de format.

Dans une variante, l'instrument permet à l'invention de reprendre le contrôle sur l'affichage et sur les boutons pour que l'utilisateur ait accès à des fonctions supplémentaires liés au module ajouté. Ainsi, il est par exemple possible de mettre l'instrument dans un mode de fonctionnement tel qu'il ne transmet plus que des rapports de mesure et permet de contrôler le déroulement du plan de mesure et d'indiquer à l'utilisateur ce qui doit être mesuré et d'avertir si la mesure est bonne ou non. Le plan de mesure peut même inclure un certain nombre de commande de choix pour que l'utilisateur puisse déclencher des actions depuis l'instrument, ces choix allant de l'envoi du résultat en fin de mesure à des choix en fonction des résultats de mesure pendant le déroulement du processus de mesure.

Dans une variante de l'invention, les modes de transmission peuvent être choisis.
a) la transmission continue, c'est-à-dire qui transmet les mesures à intervalle régulier.
b) La transmission par envoi de valeurs, c'est-à-dire que l'utilisateur agit sur un bouton de l'instrument pour envoyer une valeur. Ou dans un mode de recherche de minimum, à partir d'une activation du mode de mesure d'extrema et la stabilisation de la valeur mesurée durant un délai prédéfini.
c) La transmission groupée, c'est-à-dire que l'invention collecte les mesures et les envoie soit sur une action de l'utilisateur, soit à intervalle de temps déterminé, soit à partir d'un nombre de mesure prédéfini. Cela optimise le temps de communication et la consommation de celle-ci.
d) La transmission de résultat, c'est-à-dire que l'invention traite un plan de mesure comportant une série de mesure à effectuer et ensuite transmet le résultat du plan de mesure à la fin du traitement. C'est le mode le plus économe, car il ne transmet pas avant d'avoir l'ensemble des mesures. De plus il stocke celle-ci ce qui permet de les conserver même en cas d'erreur de transmission.
e) Le traitement de la mesure et des tolérances est entièrement gérée dans un module programmable par interface de transmission et ainsi l'invention permet de traiter un plan de mesure et indique à l'utilisateur le déroulement du plan et les erreurs éventuelles. Le résultat n'est pas nécessairement stocké, mais cela permet un contrôle rapide d'une série de pièces identiques.

Selon un aspect de l'invention, l'instrument peut accepter le couvercle 35 illustré à la figure 3 lequel, outre à sa fonction de fermeture, comprend un circuit d'interface de préparation et de mise en forme des données 330 en vue du traitement et du stockage ou de la transmission, cette interface est couplée avec par exemple une interface courante de transmission radio sans fils utilisant des protocoles standardisés et une antenne 331 qui peut être noyée dans le plastique du couvercle, permettant la transmission des informations vers un dispositif externe , qui n'est pas connecté physiquement avec l'instrument. On peut imaginer, par exemple, un circuit d'interface radio selon le standard Bluetooth®, HomeRF®, WiFi®, ZigBee®, ou tout autre standard de communication, permettant l'échange de données entre le calibre 40 et une imprimante, un ordinateur, un téléphone portable, ou tout autre dispositif. Le circuit d'interface radio 330 se connecte électriquement au circuit de mesure 320 par un ou plusieurs dispositifs de contact 323 pour l'échange de données selon des protocoles plus ou moins étendus selon le type d'instrument.

Dans une variante de l'invention, on peut trouver des modules pilotant l'instrument mettant ainsi l'instrument dans un mode entièrement différent que le mode normal de fonctionnement, ceci dans le but de l'utiliser pour des fonctions de mesure inutiles ou impossibles dans un mode classique. Dans cette variante l'instrument peut être programmé pour effectuer des séries de mesures successives, et grâce à des visuels simples ou des effets sonores de l'instrument ou du système qui collecte les données, permet à l'opérateur de passer de mesure en mesure tout en sachant que la mesure est effectuée dans une variante, une information de tolérance est directement perceptible, permettant ainsi d'effectuer des mesures en série. L'invention peut aussi inclure une mémoire amovible pour stocker des programmes et des mesures.

Dans une variante de l'invention, l'élément sans fil est apparié avec au moins un autre élément pour que la transmission soit déterminée de façon prédéfinie. Ceci réduit les protocoles de négociation entre émetteurs et récepteurs et permet dans un environnement bruyant une connexion plus rapide. Dans cette variante les bouchons sont interchangeables et peuvent avantageusement offrir une possibilité d'utilisation d'accumulateurs que l'on recharge d'un coté pendant que de l'autre il est utilisé sur l'instrument portable. Dans ce mode de fonctionnement les deux bouchons sont transparents pour la communication et donc peuvent interconnecter l'instrument directement avec une interface d'ordinateurs, comme par exemple un port de communication USB, ne nécessitant que très peu de matériel et de software. Dans une variante, il est possible d'utiliser ces bouchons comme une passerelle entre deux appareils quelconques munis d'entrée et sortie USB. De plus ce mode d'appairage peut comporter plus de 2 éléments de transmission; ainsi, il est possible de coupler un afficheur et une interface utilisateur avec les autres éléments pour qu'ils interagissent ensemble sur un canal de transmission prédéfini, l'utilisateur peut donc effectuer des mesures même dans des conditions difficiles d'accès ou de visibilité réduite avec une autonomie maximale du système.

Par ailleurs, l'invention comprend également des variantes, dans lesquelles, le couvercle comporte une interface de données de nature différente, par exemple une interface USB, une interface sérielle, un dispositif de communication sans fils par infrarouges ou ultrason selon le milieu d'utilisation. Cette variante de l'invention permet de proposer des interfaces de données optionnelles pour une variété de dispositifs sans devoir ménager des ouvertures ou prévoir des connecteurs spécifiques dans le boîtier, mais utilisant l'interface disponible et la même ouverture du logement de pile.

Dans une variante de connexion USB, on peut amener l'alimentation depuis un système externe comme par exemple un ordinateur, par un simple circuit de stabilisation, si requis, et disposer ainsi, d'une source d'alimentation qui ne nécessite pas l'ajout de pile pour alimenter ni l'instrument ni la transmission. Ainsi le système est capable de rester alimenté en permanence et transmettre de façon simple les informations et offre une étanchéité nécessaire au fonctionnement correct de l'instrument, car le cordon est fixé au bouchon de façon étanche.

Préférablement, le couvercle 330 comprend aussi une seconde pile électrique 342 destinée à l'alimentation de l'interface de transmission sans fil de données. De cette manière l'ajout de l'interface de transmission sans fil de données ne décharge pas la pile 341 de l'instrument plus rapidement que dans l'instrument conventionnel, le calibre peut aussi fonctionner normalement lorsque la pile 342 de l'interface sans fils est complètement épuisée. Dans une variante de l'invention, toutefois, on pourrait utiliser une source d'alimentation commune à l'interface 330 et au circuit de mesure 320. En ce cas, un ou plus des dispositifs de contact sont utilisés pour relier les alimentions de l'instrument et de l'interface de données 330 permettant par exemple de mettre une ou plusieurs piles en parallèle ou d'utiliser des batteries de plus grande capacité avec une adaptation électronique intégrée dans le bouchon de pile pour pouvoir adapter au besoin différents types de source d'alimentations. De plus, ce mode de fonctionnement est particulièrement adapté dans le cas ou l'instrument n'est utilisé que dans un mode avec transmission et que l'on désire connaitre l'état des piles pendant la mesure.

L'interface de données 330 est utilisée, par exemple, pour transmettre les données de mesure à une imprimante ou à un ordinateur, et générer un rapport de mesure. Le calibre peut comporter un mode de mesure automatique, dans lequel le circuit de mesure 320 détecte les points de rebroussement de la distance entre les becs pour la mesure intérieure ou extérieure d'une pièce et transmet seulement les mesures correspondant à un extrema atteint correspondant au point de mesure durant un instant prédéfini, permettant ainsi de mesurer facilement et rapidement des dimensions, sans valider chaque mesure par un des boutons 360.

Préférablement, le circuit d'interface 330 est bidirectionnel et permet aussi la réception de données provenant d'un dispositif externe, par exemple des valeurs de tolérance, mais aussi des commandes et des ordres provenant de déclencheur de mesure comme par exemple des pédales à pied, permettant ainsi d'actionner un élément plus accessible que les boutons de l'instrument dans les cas où cela pourrait compromettre la précision de la mesure. De même l'affichage peut être repris sur un ordinateur ou sur un périphérique additionnel, ou l'indication de mesure est fournie sous une information sonore ou visuelle permettant à l'opérateur de connaitre le résultat de la mesure quand il n'a pas accès à l'affichage de l'instrument ou qu'il doit porter son attention à la manipulation de l'instrument.

Selon une variante de l'invention, le calibre 40 peut accepter soit un couvercle équipé d'interface de données bidirectionnelle 35, soit une interface de traitement de donnée, soit une interface de mesure complémentaire de variables environnementales (température, rayonnement, vibration, orientation, alimentation,..), soit une interface de stockage, soit une combinaison d'un ou plusieurs de ces éléments, soit un couvercle passif, de hauteur réduite, permettant de relier par un système filaire l'appareil portable avec un ordinateur. De cette manière, on peut offrir un couvercle/interface 35 comme composante accessoire, sans avoir à utiliser des systèmes de fixation dédiés, et sans occuper le connecteur sériel, ou un autre connecteur externe. D'autre part ce type de système sériel peut apporter une alimentation stable sans nécessiter de batterie et offrir une connectivité simplifiée comme par exemple de type USB ou sérielle, tout en garantissant l'étanchéité de l'instrument de mesure, le câble étant solidaire avec le couvercle de manière totalement étanche.

Selon une autre variante de l'invention, le couvercle peut contenir un support pour carte mémoire miniature amovible permettant ainsi de stocker des programmes de mesure et des mesures rendant ainsi l'appareil capable d'effectuer des séries de mesure préprogrammées et stocker les résultats. La carte mémoire amovible permet ensuite de transmettre les résultats et reprendre l'information sur un ordinateur par des moyens de lecture de carte mémoire habituels.

Selon une variante programmable, le système inclus dans le couvercle est capable de traiter les informations de mesure et d'afficher un status de mesure au moyen de système lumineux ou sonore depuis l'instrument ou son module ou depuis un périphérique externe, permettant ainsi à l'opérateur d'avoir une information directe du résultat, même dans le cas où il n'arrive pas à lire l'affichage, ou dans le cas d'instruments sans affichage. Dans ce cadre, l'invention comporte un certain nombre de commandes et d'instructions capables de paramétrer le fonctionnement et d'échanger des informations avec des périphériques externes ou des avertisseurs intégrés.

Dans une variante, l'invention comporte aussi un mode sécurisé qui permet de protéger le contenu du système et limite l'accès dans certains modes aux seuls utilisateurs authentifiés. Ce mode est particulièrement requis dans les options de programmation et de commande à distance pour améliorer l'immunité aux perturbations externes. D'autre part les transmissions peuvent comporter des modes avec validation de transmission, de type checksum, parité, cryptage, codage de reconstruction, etc, en particulier dans les environnements perturbés, pour éviter les pertes de données lors des transmissions et les dysfonctionnements qui pourraient en résulter.

Avantageusement, plusieurs types de couvercles de l'invention peuvent être utilisés de façon interchangeable et compatibles avec plusieurs dispositifs différents, sur des logements de piles identiques, ne nécessitant que quelques contacts de transmission de données. Moyennant quelques adaptations, il est aussi envisageable de faire des adaptations sur des modèles existants pour ajouter ce type de solutions plus ou moins complètement en utilisant des systèmes et des normes de communications déjà existants.

Le couvercle 35 de l'invention n'est pas limitée uniquement à la transmission de donnée, mais il peut en lieu et place comprendre des interfaces mémoire ou des interfaces programmables capables d'affichage rapide de tolérance programmée, de traitement conditionnel et toutes les combinaisons des différentes variantes. De plus, il peut s'adapter à différents instruments et possède une programmation adaptée à chaque situation. Il peut aussi déterminer automatiquement le type d'instruments connecté par des informations échangées entre l'instrument, l'invention et les appareils externes, mais peut aussi est préprogrammé pour ne fonctionner que dans un cadre restreint d'utilisation, spécifique à un instrument. Le système peut contenir une ou plusieurs programmations selon la gamme d'instrument à couvrir, il peut en outre être reprogrammé pour une gamme d'instrument. Un aspect indépendant de l'invention est une interface de communication universelle 330 qui peut être connecté selon les besoins avec une variété d'instrument à pile, et qui est conformée pour se fixer au logement de pile de l'instrument, et le fermer pour former un volume étanche. L'interface de l'invention peut être montée sur des instruments de mesure dimensionnels, ou aussi sur d'autres dispositifs électroniques autonomes, par exemple des thermomètres, des instruments de mesure de poids, etc.

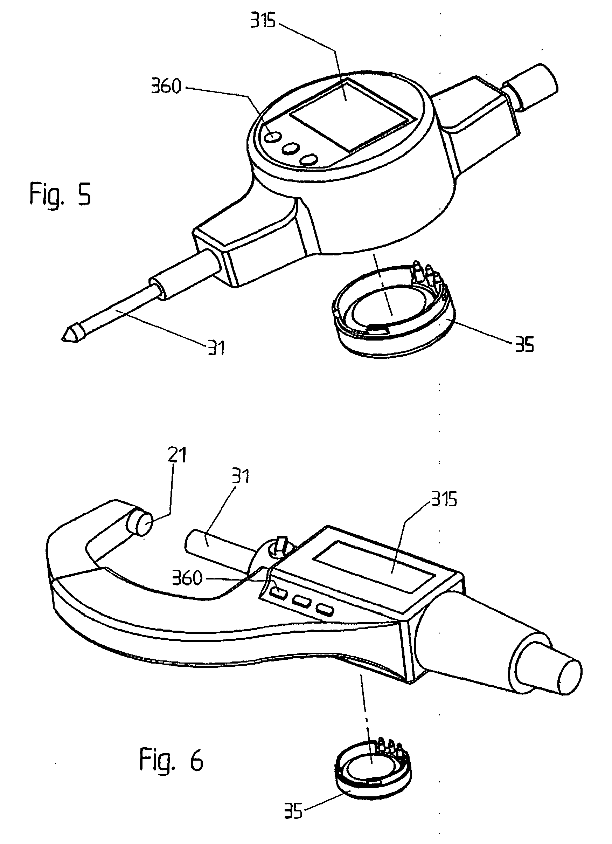

La figure 5 montre un comparateur électronique avec un affichage 315, des boutons 360, et une touche mobile 31, combinable avec un couvercle 35 muni d'une interface de données selon l'invention, pour communiquer avec des dispositifs externes autant des données de mesures que des informations servant à la préparation, à l'exécution de la mesure et à interroger l'état de l'instrument. La figure 6 illustre un couvercle 35 selon l'invention en association avec un micromètre muni d'une touche fixe 21, une touche mobile 31, et un affichage 315. Il faut souligner que la liste d'instruments capables d'utiliser cette invention n'est pas exhaustive, et que l'invention peut être appliquée aussi à une colonne de mesure de hauteur, par exemple, ou à tout autre instrument alimenté par batterie ou possédant une pile de secours et qui nécessitent l'ajout une liaison avec un système externe comme un ordinateur pour collecter les données.

Les exemples présentés se réfèrent à des instruments de mesure munis d'une interface utilisateur locale, par exemple d'un affichage 315 et de boutons de commande 360. Ces caractéristique, bien que désirables, ne sont pas essentielles pour l'invention. On peut en effet appliquer un couvercle 35 à un instrument dépourvu d'interface utilisateur. De même il est aussi envisageable de transformer des instruments existants au moyen d'une interface souple que l'on insère dans l'instrument existant pour le rendre compatible avec cette invention ou dans certains cas remplace le circuit de mesure pour qu'il puisse interagir avec l'invention de façon optimale.

Selon une autre variante de l'invention, l'interface de données contenue dans le couvercle 35 est une interface utilisateur, comprenant par exemple un affichage numérique. On peut ainsi avoir, par exemple, un pied à coulisse à lecture directe sans affichage électronique, qui devient un instrument électronique lorsqu'il est équipé avec l'interface de l'invention, mais aussi lorsque l'opérateur éprouve des difficultés à lire l'affichage dans des endroits difficiles d'accès, il est utile d'avoir un rappel de l'affichage sur un affichage externe que l'on peut disposer librement et qui est relié à l'instrument de mesure soit par liaison sans fils soit par une liaison filaire. Le second affichage peut par exemple être muni d'un aimant de maintient pour le positionner sur un support magnétisable pendant que l'opérateur effectue la mesure.

### Numéros de référence employés sur les figures

- 20: Perche
- 21: bec fixe, touche fixe
- 27: Échelle
- 30: Coulisseau
- 31: bec mobile, touche mobile
- 35: couvercle du logement des piles
- 40: calibre, pied à coulisse, instrument de mesure
- 315: Affichage
- 320: circuit de mesure
- 323: Contacts électriques
- 327: Encodeur
- 330: interface de données
- 331: Antenne
- 337: interface filaire
- 341: pile circuit de mesure
- 342: pile interface de données
- 360: Poussoir

## Revendications

1. Instrument portable de mesure de dimensions (40) comprenant un circuit électronique (320) arrangé pour déterminer une donnée à partir d'une mesure provenant d'un capteur, et un logement pourvu d'une source d'alimentation interne fermé par un couvercle détachable (35) permettant le remplacement de ladite source d'alimentation interne, **caractérisé en ce que** ledit couvercle détachable de remplacement (35) comprend un circuit d'interface de communication de données (330) capable d'effectuer la communication des informations entre ledit circuit de mesure et un dispositif récepteur.

2. Instrument portable de mesure de dimensions (40) selon la revendication précédente, comprenant un affichage (315) connecté avec ledit circuit électronique (320) arrangé pour afficher une indication d'une mesure de dimension obtenue par ledit capteur.

3. Instrument portable de mesure de dimensions (40) selon l'une des revendications précédentes, dans lequel ledit couvercle détachable de remplacement (35) comporte des contacts électriques reliant ledit circuit d'interface de communication de données (330) et ledit circuit de mesure (320).

4. Instrument portable de mesure de dimensions (40) selon l'une des revendications précédentes, dans lequel ledit logement contient une première source d'alimentation pour le circuit de mesure (320) et le couvercle détachable de remplacement inclut une seconde source d'alimentation indépendante de la première, un circuit de traitement de données et une interface radio (330) de communication.

5. Instrument portable de mesure de dimensions (40) selon l'une des revendications précédentes, dans lequel ladite interface de communication de données est bidirectionnelle, et ledit circuit de traitement de données permet de gérér les mesures de l'instrument selon des instructions programmables.

6. Instrument portable de mesure de dimensions (40) selon l'une des revendications précédentes, dans lequel ledit couvercle (35) ferme le logement de manière étanche.

7. Instrument portable de mesure de dimensions (40) selon l'une des revendications précédentes, dans lequel ladite interface de communication comprend une interface radio, ou une interface sérielle, ou une interface de stockage de données et un système programmable de traitement des mesures pour gérer les résultats et piloter l'instrument pendant les mesures.

8. Interface de communication (330) connectable sur un instrument portable de mesure de dimensions (40) permettant la communication des commandes et des mesures entre ledit instrument de mesure (40) et un dispositif externe **caractérisé en ce que** l'interface est arrangée pour se fixer à l'endroit du logement de batterie sur ledit instrument de mesure (40) et fermant ledit logement lorsqu'elle est installée sur l'instrument de mesure (40) pour former, avec ladite interface de communication, un volume étanche avec l'instrument.

9. Interface (330) selon la revendication 8, dans lequel ladite interface de données (330) est une interface de communication radio, ou une interface de communication sérielle, ou une interface de stockage ou une interface de traitement de donnée ou une interface permettant de déporter l'interface utilisateur vers un élément externe à l'instrument.

10. Interface (330) selon l'une des revendications de 8 à 9, comprenant une source d'alimentation (342) pour l'interface de communication qui n'altère pas le fonctionnement de la source d'alimentation de l'instrument, source d'alimentation pouvant aussi provenir d'un équipement externe au travers d'une interface de communication filaire.

11. Interface (330) selon l'une des revendications de 8 à 10, des contacts électriques pour la transmission de l'alimentation et des données relient ladite interface de communication (330) et ledit instrument de mesure (40) lorsque l'interface est installée sur l'instrument de mesure (40).

12. Interface (330) selon l'une des revendications de 8 à 11, dans lequel ladite interface de communication de donnée est bidirectionnelle permettant de recevoir des commandes de déclenchement de mesures par le biais de déclencheurs externes, et/ou des programmes d'instructions, des commandes et des mises à jour.

13. Interface (330) selon l'une des revendications 8 à 12, dans lequel ladite interface de traitement de donnée permet de stocker en mémoire des programmes d'exécution et des mesures de l'instrument et est capable d'effectuer des mesures d'environnement et des corrections pour réduire les erreurs de mesure.

## Patentansprüche

1. Tragbares Dimensionsmessinstrument (40) mit einer derart angeordneten elektronischen Schaltung (320), um Daten aus einer von einem Sensor stammenden Messung zu bestimmen, und mit einem Fach, das mit einer internen Speisungsquelle ausgestattet ist und durch einen abnehmbaren Deckel (35) geschlossen werden kann, der das Ersetzen der besagten internen Speisungsquelle ermöglicht, **dadurch gekennzeichnet, dass** der abnehmbare Deckel (35) eine Datenkommunikationsschnittstellenschaltung (330) umfasst, welche die Kommunikation der Informationen zwischen der besagten Messschaltung und einer Empfangsvorrichtung durchführen kann.

2. Tragbares Dimensionsmessinstrument (40) gemäss dem vorhergehenden Anspruch, mit einer mit der besagten elektronischen Schaltung (320) verbundenen Anzeige (315), derart angeordnet, um eine durch den besagten Sensor erhaltene Dimensionsmessungsangabe anzuzeigen.

3. Tragbares Dimensionsmessinstrument (40) gemäss einem der vorhergehenden Ansprüche, worin der besagte abnehmbare Ersatzdeckel (35) elektrische Kontakte umfasst, welche die besagte Datenkommunikationsschnittstellenschaltung (330) und die besagte Messschaltung (320) verbinden.

4. Tragbares Dimensionsmessinstrument (40) gemäss einem der vorhergehenden Ansprüche, worin das besagte Fach eine erste Stromquelle für die Messschaltung (320) umfasst und worin der abnehmbare Ersatzdeckel eine zweite, von der ersten unabhängige Stromquelle, eine Datenverarbeitungsschaltung und eine Radiokommunikationsschnittstelle (330) umfasst.

5. Tragbares Dimensionsmessinstrument (40) gemäss einem der vorhergehenden Ansprüche, worin die besagte Datenkommunikationsschnittstelle zweidirektional ist und worin die besagte Datenverarbeitungsschaltung das Verwalten der Messungen des Instruments entsprechend programmierbaren Befehlen ermöglicht.

6. Tragbares Dimensionsmessinstrument (40) gemäss einem der vorhergehenden Ansprüche, worin der besagte Deckel (35) das Fach auf dichte Weise schliesst.

7. Tragbares Dimensionsmessinstrument (40) gemäss einem der vorhergehenden Ansprüche, worin die besagte Kommunikationsschnittstelle eine Radioschnittstelle oder eine serielle Schnittstelle oder eine Datenspeicherungsschnittstelle sowie ein programmierbares Messverarbeitungssystem umfasst, um die Resultate zu verwalten und das Instrument während der Messungen zu steuern.

8. Kommunikationsschnittstelle (330), welche auf einem tragbaren Dimensionsmessinstrument (40) verbunden werden kann, zur Kommunikation der Befehle und Messungen zwischen dem besagten Messinstrument (40) und einem externen Gerät, dadurch gekenntzeichnet, dass die Schnittstelle derart angeordnet ist, dass sie am Ort des Batteriefachs auf dem besagten Messinstrument (40) angebracht werden kann, und worin sie das besagte Fach schliesst, wenn sie auf dem Messinstrument (40) angebracht ist, um zusammen mit der besagten Kommunikationsschnittstelle ein mit dem Instrument dichtes Volumen zu bilden.

9. Schnittstelle (330) gemäss Anspruch 8, worin die besagte Datenschnittstelle (330) eine Radiokommunikationsschnittstelle oder eine serielle Kommunikationsschnittstelle oder eine Datenspeicherungsschnittstelle oder eine Datenverarbeitungsschnittstelle oder eine Schnittstelle zur Verlagerung der Benutzerschnittstelle auf ein Element ausserhalb des Instruments ist.

10. Schnittstelle (330) gemäss einem der Ansprüche 8 bis 9, mit einer Stromquelle (342) für die Kommunkiationsschnittstelle, welche den Betrieb der Stromquelle des Instrumentes nicht ändert, worin die Stromquelle auch von einem externem Apparat durch eine kabelgebundene Kommunikationsschnittstelle kommen kann.

11. Schnittstelle (330) gemäss einem der Ansprüche 8 bis 10, worin elektrische Kontakte zur Übertragung des Stroms und der Daten die besagte Kommunikationsschnittstelle (330) und das besagte Messinstrument (40) verbinden, wenn die Schnittstelle auf dem Messinstrument (40) angebracht ist.

12. Schnittstelle (330) gemäss einem der Ansprüche 8 bis 11, worin die besagte Datenkommunikationsschnittstelle zweidirektional ist, und es ermöglicht, Messbefehlauslöser durch externe Auslösegeräte und/oder Instruktionsprogramme, Befehle und Aktualisierungen zu erhalten.

13. Schnittstelle (330) gemäss einem der Ansprüche 8 bis 12, worin die besagte Datenverarbeitungsschnittstelle es erlaubt, Ausführungsprogramme und Messungen des Instrumentes zu speichern, und worin sie in der Lage ist, Umgebungsmessungen und Korrekturen durchzuführen, um Messfehler zu verringern.

## Claims

1. Portable dimensions-measuring instrument (40) including an electronic circuit (320) arranged for determining a data from a measurement originating from a sensor, and a compartment provided with an internal power source closed by a removable cover (35) enabling said internal power source to be replaced, **characterized in that** said removable replacement cover (35) includes a data communication interface circuit (330) capable of performing the information communication between said measuring circuit and a receiver device.

2. Portable dimensions-measuring instrument (40) according to the preceding claim, including a display (315) connected with said electronic circuit (320) arranged for displaying an indication of a dimension measurement obtained by said sensor.

3. Portable dimensions-measuring instrument (40) according to one of the preceding claims, wherein said removable replacement cover (35) includes electric contacts connecting said data communication interface circuit (330) and said measuring circuit (320).

4. Portable dimensions-measuring instrument (40) according to one of the preceding claims, wherein said compartment contains a first power source for the measuring circuit (320) and the removable replacement cover includes a second power source independent from the first, a data processing circuit and a radio communication interface (330).

5. Portable dimensions-measuring instrument (40) according to one of the preceding claims, wherein said data communication interface is bidirectional and said data processing circuit enables the instrument's measurements to be managed according to programmable instructions.

6. Portable dimensions-measuring instrument (40) according to one of the preceding claims, wherein said cover (35) closes the compartment in a sealed manner.

7. Portable dimensions-measuring instrument (40) according to one of the preceding claims, wherein said communication interface includes a radio interface or a serial interface or a data storage interface and a programmable measurement processing system for managing the results and controlling the instrument during the measurements.

8. Communication interface (330) that can be connected on a portable dimensions-measuring instrument (40) enabling commands and measurements to be communicated between said measuring instrument (40) and an external device, **characterized in that** the interface is arranged to be fastened in the location of the battery compartment on said measuring instrument (40) and wherein it closes said compartment when it is installed on the measuring instrument (40) in order to form, together with said communication interface, a sealed volume with the instrument.

9. Interface (330) according to claim 8, wherein said data interface (330) is a radio communication interface or a serial communication interface or a storage interface or a data processing interface or an interface enabling the user interface to be shifted towards an element external to the instrument.

10. Interface (330) according to one of the claims 8 to 9, including a power source (342) for the communication interface that does not alter the operation of the instrument's power source, wherein the power source can also come from an external equipment through a wired communication interface.

11. Interface (330) according to one of the claims 8 to 10, wherein electric contacts for the transmission of the power and of the data connect said communication interface (330) and said measuring instrument (40) when the interface is installed on the measuring instrument (40).

12. Interface (330) according to one of the claims 8 to 11, wherein said data communication interface is bidirectional, being capable of receiving measurement trigger commands through external trigger devices and/or instruction programs, commands and updates.

13. Interface (330) according to one of the claims 8 to 12, wherein said data processing interface enables execution programs and measurements of the instrument to be stored and is capable of performing environment measurements and corrections in order to reduce the measurement errors.
